# EUROPÄISCHE PATENTSCHRIFT

(11) **EP 1 483 554 B1**
(45) Veröffentlichungstag und Bekanntmachung des Hinweises auf die Patenterteilung: **07.12.2005**
(21) Anmeldenummer: 03743872.8
(22) Anmeldetag: 11.03.2003
(51) Int. Cl.: G01F 23/24

(54) **VORRICHTUNG ZUR KONDUKTIVEN GRENZSTANDMESSUNG**
DEVICE FOR CONDUCTIVE LIMIT LEVEL DETERMINATION
DISPOSITIF POUR LA DETERMINATION PAR CONDUCTIVITE D'UN NIVEAU LIMITE

(30) Priorität: 11.03.2002 DE 10210504
(43) Veröffentlichungstag der Anmeldung: 08.12.2004
(73) Patentinhaber: ENDRESS + HAUSER GMBH + CO., 79689 Maulburg (DE)
(72) Erfinder: FLORENZ, Hans-Jörg, 77654 Offenburg (DE); HEILIG, Clemens, 77654 Offenburg (DE); WERNET, Armin, 79618 Rheinfelden (DE); UPPENKAMP, Kaj, 79585 Steinen (DE)
(74) Vertreter: Andres, Angelika Maria
(86) Internationale Anmeldenummer: PCT/EP2003/002497
(87) Internationale Veröffentlichungsnummer: WO 2003/076882

(56) Entgegenhaltungen:
- US-A- 2 639 411
- US-A- 3 916 213

## Beschreibung

Die Erfindung bezieht sich auf eine Vorrichtung zur konduktiven Grenzstand messung gemäß Oberbegriff des Anspruchs 1.

Konduktive Feldgeräte zur Grenzstandmessung in Flüssigkeiten sind seit vielen Jahren bekannt. Bei diesen Feldgeräten wird der ohmsche Widerstand bzw. Leitwert zwischen einer in den Behälter ragenden konduktiven Sonde und der Behälterwand oder zwischen zwei Elektroden einer Sonde gemessen. Bildet nun ein leitfähiges Medium eine elektrische Verbindung zwischen der konduktiven Sonde und der Behälterwand bzw. zwischen den beiden Elektroden einer Sonde, verringert sich der gemessene ohmsche Widerstand deutlich.

Die einfachste Möglichkeit, diesen ohmschen Widerstand zu messen, besteht darin, eine Gleichspannung auf den Sondenkreis aufzuprägen und den durch die Sonde fließenden Strom zu messen. Dieses Verfahren hat allerdings zwei Nachteile; zum einen kann der ständig fließende Gleichstrom zur Korrosion der konduktiven Sondenstäbe bzw. der Behälterwand führen und zum anderen können die konduktiven_Sondenstäbe und die Behälterwand ein galvanisches Element bilden und so einen Stromfluss erzeugen, der dem Messstrom überlagert ist und somit das Messergebnis verfälscht. Aus diesen Gründen ist es sinnvoller, mit einer Wechselspannung zu messen, wobei eine vollständige gleichspannungsmäßige Trennung des Messkreises vom Sondenkreis und damit vom Prozess durch Kondensatoren möglich ist. Bisher wurden derartige Schaltungen in vergleichsweise aufwändiger Analogtechnik realisiert (siehe z.B. US 3 916 213 A).

Der Erfindung liegt die Aufgabe zugrunde, eine Vorrichtung zur konduktiven Grenzstand messung mit einem einfachen Aufbau und einer guten Störgrößenkompensation anzugeben.

Diese Aufgabe wird erfindungsgemäß durch die Merkmale des Anspruchs 1 gelöst. Die abhängigen Ansprüche betreffen vorteilhafte Aus- und Weiterbildungen der Erfindung.

Der Hauptgedanke der Erfindung besteht darin, dass im Messkreis eine Messbrückenschaltung vorhanden ist, wobei mindestens ein Koppelkondensator zur gleichspannungsmäßigen Trennung der konduktiven Sonde vom Messkreis vorhanden ist, und wobei der mindestens eine Koppelkondensator in die Messbrückenschaltung integriert ist.

Bei einer besonders vorteilhaften Ausführungsform der Erfindung ist in der Messbrückenschaltung mindestens ein zusätzlicher Kondensator angeordnet, wobei der mindestens eine zusätzliche Kondensator im Referenzzweig der Messbrücke angeordnet ist und der mindestens eine Koppelkondensator im Sondenzweig der Messbrücke angeordnet ist.

Ein grundsätzliches Problem bei derartigen Messbrückenschaltungen ist, dass sich nicht nur das Verhältnis zwischen Referenz- und Messwiderstand auf die Brückenspannung auswirkt, sondern auch das Verhältnis der verwendeten Kondensatoren zueinander. Im Idealfall sind die Werte des Koppelkondensators und des zusätzlichen Kondensators exakt gleich. In der Praxis gibt es allerdings Abweichungen, die durch Toleranzen und Temperaturverhalten der Kondensatoren verursacht werden.

Bei einer besonders vorteilhaften Weiterbildung der Erfindung werden die toleranzbedingte Abweichungen zwischen den beiden Kondensatoren durch eine gezielte Auswahl des Messzeitpunktes kompensiert.

Zur Kompensation werden jeweils mehrere Messwerte ungefähr in der Mitte einer Halbwelle ermittelt. Aus den ermittelten Messwerten wird dann ein Mittelwert gebildet. Als Messsignal wird dann nur noch die Differenz zwischen Messungen in der oberen und unteren Halbwelle betrachtet. Dadurch werden toleranzbedingte Abweichungen der Kondensatoren kompensiert.

Zur genaueren Ermittlung des Messzeitpunktes werden für den dimensionierten Messkreis Simulationsläufe mit unterschiedlichen Abweichungen zwischen den beiden Kondensatoren mit einem Rechnerprogramm durchgeführt und aufgezeichnet. Aus den Aufzeichnungen lässt sich dann innerhalb der oberen bzw. unteren Halbwelle der aufgezeichneten Simulationskurven jeweils ein Punkt ermitteln, in dem sich die Simulationskurven der unterschiedlichen Abweichungen der Kondensatoren schneiden. Durch einen Vergleich mit dem Messsignal lässt sich der genaue Zeitpunkt (t-Achse) des Schnittpunktes ermitteln und in einem Speicher, der Teil der Steuer/Auswerteschaltung ist abspeichem. Bei der Messung wird dann die Messspannung genau an diesem Zeitpunkt bzw. an mehreren Zeitpunkten, die symmetrisch um diesen genauen Zeitpunkt gruppiert sind, abgetastet. So können beispielsweise zwischen 5 und 50 zusätzliche Messungen vorgenommen werden. Durch diese Maßnahme kommt man unabhängig von der Abweichung der Kondensatoren immer auf das selbe Ergebnis. Auf diese Weise lassen sich relativ einfach die Toleranzen und der Temperaturgang der verwendeten Kondensatoren kompensieren

Zudem wird durch diese "doppelte Differenzmessung" - zum einen zwischen Mess- und Referenzzweig und zum anderen zwischen oberer und unterer Halbwelle - der Einfluss von Betriebsspannungsschwankungen nahezu vollständig kompensiert.

Um mit wenigen Bauteilen auszukommen, ist die Steuer/Auswerteschaltung des Messkreises durch eine Mikroprozessorschaltung realisiert, wobei die Mikroprozessorschaltung eine Generatorfunktion zur Erzeugung des Messsignals und/oder eine Messfunktion und/oder eine Bereichsumschaltung und/oder ein Komparatorfunktion und/oder eine Hysteresefunktion und/oder eine Ausgangssignalerzeugung ausführt.

Als Messsignale werden relativ niederfrequente (ca. 1kHz), rechteckförmige Signale verwendet, die einfach im Mikrocontroller zu erzeugen sind, beispielsweise durch Frequenzteilung des Taktsignals.

Um einen großen Messbereich (zwischen 100Ω und 100 kΩ) abzudecken, wird mit einer Brückenschaltung gemessen, in der die Referenzwiderstände zur Messbereichsanpassung umschaltbar ausgeführt sind. Als Schaltelemente werden Halbleiterschalter, vorzugsweise MOSFet benutzt.

Durch die Verwendung einer Mikroprozessorschaltung zur Erzeugung der Messsignale ist kein analoger Oszillator mehr nötig. Zudem ist bei einer geeigneten Ausführung der Steuer/Auswerteschaltung und einer gezielten Wahl der Messzeitpunkte keine Gleichrichtung der Wechselsignale mehr nötig.

Durch die Verwendung einer Mikroprozessorschaltung ist es möglich, mit geringen Änderungen an der Hardware unterschiedliche Ausgangssignale wie z.B. ein PFM-Ausgangssignal, 4-20 mA-Signal, 0-10 V-Signal oder Schaltsignal auszugeben.

Zudem kann, wenn nicht ständig gemessen, sondern nur mit einzelnen Rechteckzyklen (beispielsweise 10 Perioden) gearbeitet wird, mit einem Zufallsgenerator Pausen mit unterschiedlichen Zeitspannen gewählt werden, wodurch sich die Unempfindlichkeit gegen elektromagnetische Einstreuungen erhöhen lässt, da keine ständigen Interferenzen zwischen Messsignal und Störsignal auftreten können.

Außerdem kann in diesen Pausen der Mikroprozessor in einen Energiespar-Mode umgeschaltet werden. Da darüber hinaus in den Pausen kein Strom durch die Sonde fließt, lässt sich der Stromverbrauch deutlich senken, was besonders für NAMUR- Anwendungen interessant ist.

Die Erfindung wird anhand der nachfolgenden Zeichnungen näher erläutert. Es zeigt:
- Fig. 1:: eine schematische Darstellung (Blockschaltbild) der Vorrichtung zur Grenzstandmessung;
- Fig. 2:: eine schematische Darstellung der Signalverläufe.

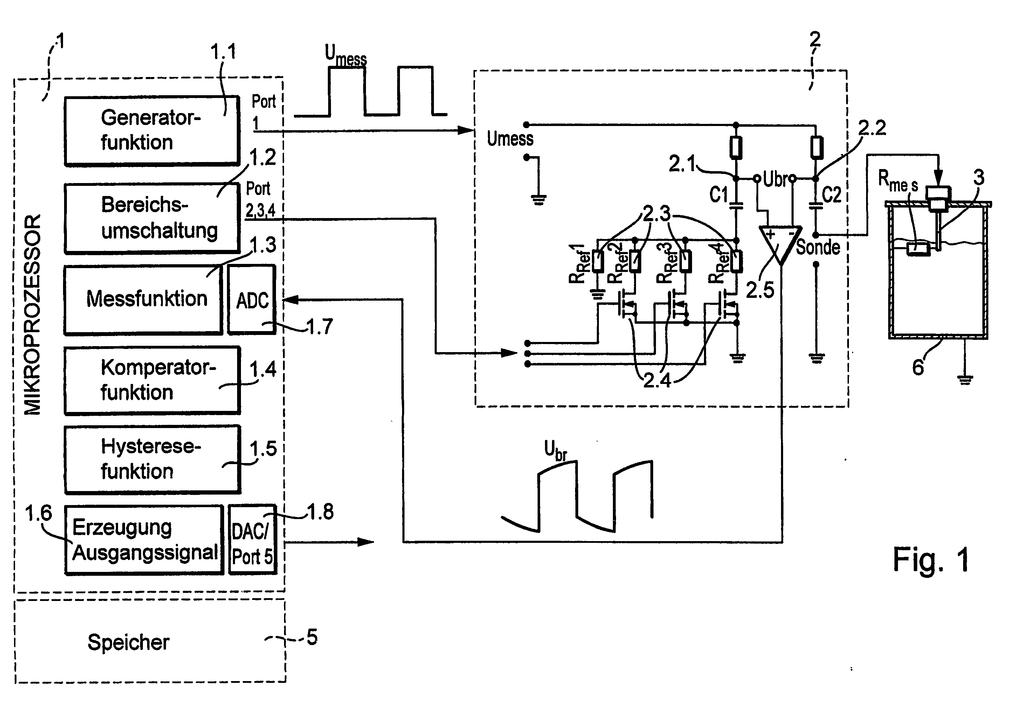

Wie aus Fig. 1 ersichtlich ist, umfasst die Vorrichtung einen Mikroprozessor 1, eine Messbrückenschaltung 2, eine Messsonde 3 in einem Behälter 4 und eine Speichereinheit 5. Im dargestellten Ausführungsbeispiel übernimmt der Mirkoprozessor 1 nachfolgende Funktionen:
- die Erzeugung eines Rechtecksignals Uₘₑₛₛ mit der Messfrequenz f₁ (Generatorfunktion 1.1), das über PORT 1 ausgegeben wird und direkt oder über eine nicht dargestellte Verstärkerstufe auf die Messbrückenschaltung 2 gegeben wird,
- eine Funktion zur Umschaltung der gewünschten Messbereiche (Bereichsumschaltung 1.2), die einerseits über digitale Ports (PORT 2,3,4) die Referenzwiderstände 2.3 in der Messbrückenschaltung 2 anpasst und andererseits Schaltschwellen und Hysteresen für die jeweiligen Messbereiche vorgibt,
- eine Analog-Digital-Wandlung 1.7 der über einen Differenzverstärker 2.5 gemessenen Brückenspannung U_{br},
- eine Messfunktion 1.3, gekoppelt mit einer Komparatorfunktion 1.4, die einen Vergleich der gemessenen Brückenspannung U_{br} mit vorgegebenem Schwellenwerten vornimmt und das Ergebnis an eine Hysteresefunktion 1.5 weitergibt.
- Erzeugung und Ausgabe des gewünschten Ausgangssignals 1.6 über einen Digital/Analogwandler oder digitalen Port 1.8.

Die Messbrückenschaltung 2 umfasst einen Referenzzweig 2.1 in dem Referenzwiderstände 2.3 über Halbleiterschalter 2.4, insbesondere MOSFet's, zu- bzw. abschaltbar sind, wobei die Halbleiterschalter 2.4 vom Mikroprozessor 1 angesteuert bzw. aktiviert werden, einen Sondenzweig 2.2 in den an Stelle der Referenzwiderstände 2.3 die Messsonde 3 geschaltet ist und einen Differenzverstärker 2.5, der die Brückenspannung U_{br} an der aus Referenzzweig 2.1 und Sondenzweig 2.2 gebildeten Messbrücke misst. Wie aus dem dargestellten Ausführungsbeispiel weiter ersichtlich ist, ist im Sondenzweig ein Koppelkondensator C2 und im Referenzzweig ein zusätzlicher Kondensator C1 angeordnet. Die Messbrückenschaltung 2 wird vom Mikroprozessor 1 durch die Generatorfunktion 1.1 mit einer rechteckförmigen Messspannung Uₘₑₛₛ versorgt und gibt die gemessene Brückenspannung U_{br} an die Messfunktion 1.3 im Mikroprozessor 1 ab.

Im dargestellten Ausführungsbeispiel wird ein rechteckförmiges Messsignal verwendet. Es ist allerdings auch möglich, beliebige andere Signalformen mit definiertem Oberwellengehalt zur Messung zu verwenden.

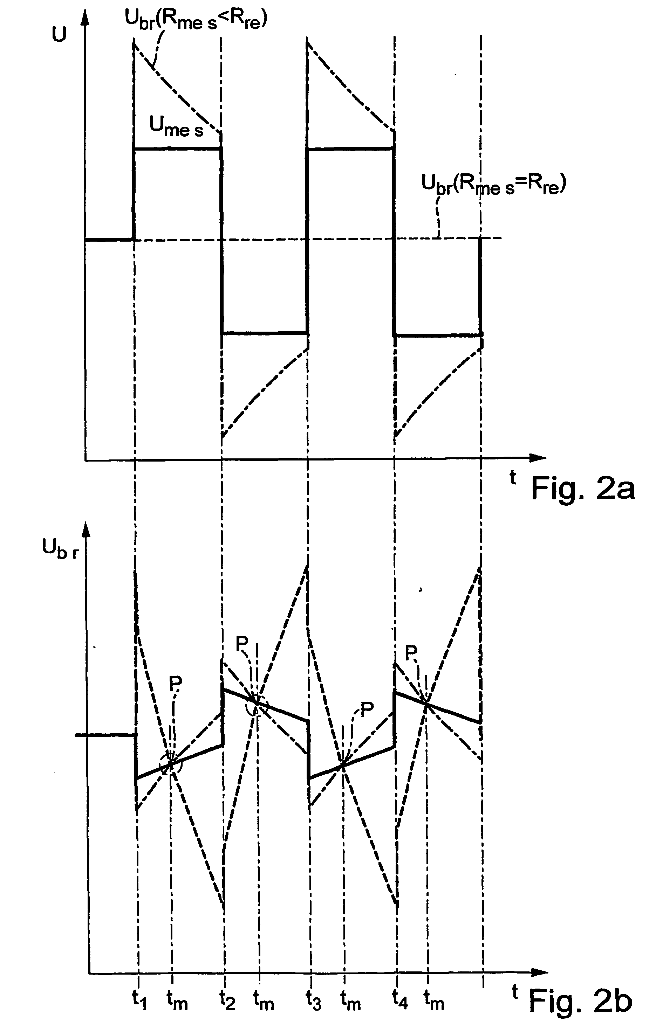

Fig. 2a zeigt den Verlauf der Spannungen Uₘₑₛₛ und U_{br} für den Fall der abgeglichenen Messbrücke (direkt am Schaltpunkt ; Rₘₑₛₛ = R_{ref}) und für den Fall der Schaltpunktunterschreitung (Rₘₑₛₛ < R_{ref}). Man kann erkennen, das im Falle der abgeglichenen Messbrücke die Spannungsdifferenz zwischen positiver und negativer Halbwelle von U_{br} verschwindet.

Fig. 2b zeigt den Verlauf der Spannung U_{br} für unterschiedliche Abweichungen der Kondensatoren C1, C2. Dabei ist der Spannungssprung zum Zeitpunkt des Umschaltens der Messpannung Uₘₑₛₛ (t₁, t₂, t₃, ...) immer gleich groß, wogegen die Steigung der Kurven von der Abweichung der Kondesatoren abhängt. Die Kurvenform ist dabei jeweils ein Ausschnitt der Lade-/Entladekurve der aus der Messbrücke gebildeten RC-Kombination. In Fig. 2b ist klar zu erkennen, dass sich die Kurven jeweils in einem Punkt P innerhalb der oberen bzw. unteren Halbwelle schneiden. Dieser Zeitpunkt tₘ lässt sich für eine gegebene Dimensionierung der Messbrückenschaltung mittels eines Simulationsprogrammes (z.B. Pspice) exakt berechnen. Wird die Spannung genau an diesem Zeitpunkt tₘ bzw. an mehreren Zeitpunkten (z.B. 20 Zeitpunkten), die symmetrisch innerhalb eines Abstandes um diesen Zeitpunkt tₘ gruppiert sind abgetastet, kommt man unabhängig von der Abweichung der Kondensatoren immer auf das selbe Ergebnis, wobei der Abstand um den Zeitpunkt tₘ ein Zehntel der Periodenlänge nicht überschreiten sollte. Auf diese Weise lassen sich Toleranzen und Temperaturgang der verwendeten Kondensatoren bis zu Abweichungen von ca. 10%, wie sie in der Praxis vorkommen, kompensieren.

## Patentansprüche

1. Vorrichtung zur konduktiven Grenzstandmessung,
mit einer Feldgerätelektronik, mit einer konduktiven Sonde (3) und einem Messkreis mit einer Steuer/Auswerteschattung (1).
wobei die Steuer/Auswerteschaltung (1) den Messkreis mit einer Messspannung (Uₘₑₛₛ) versorgt, bei welcher es sich um eine Wechselspannung handelt,
**dadurch gekennzeichnet,**
**dass** im Messkreis eine Messbrückenschaltung (2) mit einem Sondenzweig (2.2), einem Referenzzweig (2.1) und einem Differenzverstärker (2.5) vorhanden ist,
wobei der Sondenzweig (2.2) die konduktive Sonde (3) und mindestens einen mit der konduktiven Sonde (3) in Serie geschalteten Koppelkondensator (C2) zur gleichspannungsmäßigen Trennung der konduktiven Sonde (3) vom Messkreis umfasst,
wobei der Referenzzweig (2.1) mindestens einen Referenzwiderstand (2.3) umfasst,
und
wobei der Differenzverstärker (2.5) die Brückenspannung (U_{br}) zwischen dem Sondenzweig (2.2) und dem Referenzzweig (2.1) misst.

2. Vorrichtung nach Anspruch 1,
**dadurch gekennzeichnet,**
**dass** mindestens ein zusätzlicher Kondensator (C1) im Referenzzweig (2.1) der Messbrückenschaltung (2) angeordnet ist.

3. Vorrichtung nach Anspruch 2,
**dadurch gekennzeichnet,**
**dass** toleranzbedingte Abweichungen zwischen den beiden Kondensatoren (C1, C2) durch eine gezielte Auswahl des Messzeitpunktes (P) kompensiert werden.

4. Vorrichtung nach Anspruch 3,
**dadurch gekennzeichnet,**
**dass** gekoppelt mit der Steuer- Auswerteeinheit (1) eine Speichereinrichtung (5) vorhanden ist, in der der genaue Messzeitpunkt (P) abgespeichert ist, wobei der genaue Messzeitpunkt (P) für einen dimensionierten Messkreis vor der Inbetriebnahme durch Simulationsläufe ermittelt wird.

5. Vorrichtung nach Anspruch 3 oder 4,
**dadurch gekennzeichnet,**
**dass** die Steuer/Auswerteschaltung (1) an mehreren Zeitpunkten, die um den genauen Messzeitpunkt (P) gruppiert sind, Messungen vornimmt und aus diesen Messungen einen Mittelwert bestimmt.

6. Vorrichtung nach Anspruch 5,
**dadurch gekennzeichnet,**
**dass** die mehreren Zeitpunkte symmetrisch um den genauen Messzeitpunkt (P) gruppiert sind.

7. Vorrichtung nach einem der vorherigen Ansprüche,
**dadurch gekennzeichnet,**
**dass** zur Messbereichserweiterung mehrere zuschaltbare Referenzwiderstände (2.3) vorhanden sind.

8. Vorrichtung nach Anspruch 7,
**dadurch gekennzeichnet,**
**dass** die Umschaltung durch Halbleiterschalter (2.4) erfolgt, die von der Steuer/Auswerteschaltung (1) aktiviert werden.

9. Vorrichtung nach einem der vorherigen Ansprüche,
**dadurch gekennzeichnet,**
**dass** die Steuer/Auswerteschaltung (1) durch eine Mikroprozessorschaltung (1) realisiert ist, wobei der Mikroprozessor eine Generatorfunktion (1.1) zur Erzeugung des Messsignals und/oder eine Messfunktion (1.3) zur Auswertung des Messsignals und/oder eine Bereichsumschaltung (1.2) und/oder ein Komparatorfunktion (1.4) und/oder eine Hysteresefunktion (1.5) und/oder eine Ausgangssignalerzeugung (1.6) ausführt.

10. Vorrichtung nach Anspruch 9,
**dadurch gekennzeichnet,**
**dass** die Messung mit einzelnen Rechteckzyklen durchgeführt wird, wobei zwischen zwei Messungen eine veränderbare Pausenzeit liegt.

11. Vorrichtung nach Anspruch 10,
**dadurch gekennzeichnet,**
**dass** die Pausenzeit durch einen Zufallgenerator, der Teil der Steuer/Auswerteschaltung (1) ist, einstellbar ist.

12. Vorrichtung nach einem der Ansprüche 9 bis 11,
**dadurch gekennzeichnet,**
**dass** in den Messpausen der Mikroprozessor (1) in einen Energiesparmode umgeschaltet ist.

## Claims

1. An apparatus for conductive limit level measurement,
with an electronic field device, with a conductive probe (3) and a measuring circuit with a control / evaluation circuit (1),
wherein the control / evaluation circuit (1) supplies the measuring circuit with a measurement voltage (**U**_{**mess**}) which is an alternating-current voltage,
**characterized in that**
a measuring-bridge circuit (2) with a probe branch (2.2), a reference branch (2.1) and a differential amplifier (2.5) is provided in the measuring circuit,
wherein the probe branch (2.2) comprises the conductive probe (3) and at least one coupling capacitor (**C2**), connected in series to the conductive probe (3), in order to separate the conductive probe (3) from the measuring circuit with respect to direct-current voltage,
wherein the reference branch (2.1) comprises at least one reference resistor (2.3), and
wherein the differential amplifier (2.5) measures the bridge voltage (**U**_{**br**}) between the probe branch (2.2) and the reference branch (2.1).

2. An apparatus according to Claim 1, **characterized in that** at least one additional capacitor (**C1**) is arranged in the reference branch (2.1) of the measuring-bridge circuit (2).

3. An apparatus according to Claim 2, **characterized in that** deviations between the two capacitors (**C1**, **C2**) caused by tolerances are compensated by a purposeful selection of the measurement time (**P**).

4. An apparatus according to Claim 3, **characterized in that** a memory device (5) is provided, which is coupled to the control / evaluation circuit (1) and in which the exact measurement time (**P**) is stored, wherein the exact measurement time (**P**) for a dimensioned measuring circuit is determined by simulation runs before the start-up.

5. An apparatus according to Claim 3 or 4, **characterized in that** the control / evaluation circuit (1) takes measurements at a multiplicity of times which are grouped around the exact measurement time (**P**), and determines an average from the said measurements.

6. An apparatus according to Claim 5, **characterized in that** the multiplicity of times are grouped symmetrically around the exact measurement time (**P**).

7. An apparatus according to one of the preceding Claims, **characterized in that** a plurality of switchable reference resistors (2.3) are provided in order to widen the range of measurement.

8. An apparatus according to Claim 7, **characterized in that** the change-over switching is carried out by semiconductor switches (2.4) which are activated by the control / evaluation circuit (1).

9. An apparatus according to one of the preceding Claims, **characterized in that** the control / evaluation circuit (1) is formed by a microprocessor circuit (1), wherein the microprocessor performs a generator function (1.1) in order to produce the measurement signal and/or a measurement function (1.3) in order to evaluate the measurement signal and/or a range switching (1.2) and/or a comparator function (1.4) and/or a hysteresis function (1.5) and/or an output-signal production (1.6).

10. An apparatus according to Claim 9, **characterized in that** the measurement is carried out with individual square cycles, wherein a changeable pause time is present between two measurements.

11. An apparatus according to Claim 10, **characterized in that** the pause time is capable of being set by a random-check generator, which is part of the control / evaluation circuit (1).

12. An apparatus according to one of Claims 9 to 11, **characterized in that** the microprocessor (1) is switched over into energy-saving mode in the measurement pauses.

## Revendications

1. Dispositif pour la mesure conductive de niveau, avec une électronique de dispositif de terrain, avec une sonde conductive (3) et un circuit de mesure avec un circuit de commande / d'analyse (1), où le circuit de commande / d'analyse (1) alimente le circuit de mesure avec une tension de mesure (Uₘₑₛₛ), pour laquelle tension il s'agit d'une tension alternative,
**caractérisé en ce qu'**il existe dans le circuit de mesure un circuit à pont de mesure (2) avec une banche de sonde (2.2), une branche de référence (2.1) et un amplificateur de différence (2.5), où la branche de sonde (2.2) comporte la sonde conductive (3) et au moins un condensateur de couplage (C2), connecté en série avec la sonde conductive (3), pour séparer la tension continue de la sonde conductive (3) de la tension continue du circuit de mesure,
où la branche de référence (2.1) comporte au moins une résistance de référence (2.3), et
où l'amplificateur de différence (2.5) mesure la tension de pont (Ubr) entre la branche de sonde (2.2) et la branche de référence (2.1).

2. Dispositif selon la revendication 1,
**caractérisé en ce qu'**au moins un condensateur supplémentaire (C1) est disposé dans la branche de référence (2.1) du circuit à pont de mesure (2).

3. Dispositif selon la revendication 2,
**caractérisé en ce que** les divergences liées à la tolérance entre les deux condensateurs (C1, C2) sont compensées par un choix ciblé des instants de mesure (P).

4. Dispositif selon la revendication 3,
**caractérisé en ce qu'**il existe un dispositif de stockage (5) couplé à l'unité de commande / d'analyse (1), dans lequel dispositif est stocké l'instant exact de mesure (P), où l'instant exact de mesure (P) est déterminé par des simulations pour un circuit de mesure dimensionné avant la mise en service.

5. Dispositif selon la revendication 3 ou 4,
**caractérisé en ce que** le circuit de commande : d'analyse (1) exécute des mesures à plusieurs instants qui sont groupés autour de l'instant exact de mesure (P) et détermine à partir de ces mesures une valeur moyenne.

6. Dispositif selon la revendication 5,
**caractérisé en ce** les multiples instants sont groupés de façon symétrique autour de l'instant exact de mesure (P).

7. Dispositif selon la revendication 6,
**caractérisé en ce qu'**il existent plusieurs résistances de référence (2.3) susceptibles d'être branchées pour agrandir la zone de mesure.

8. Dispositif selon la revendication 7,
**caractérisé en ce** la commutation est effectuée au moyen de commutateurs à semiconducteur (2.4) qui sont activés par le circuit de commande / d'analyse (1).

9. Dispositif selon n'importe laquelle des revendications précédentes,
**caractérisé en ce que** le circuit de commande / d'analyse (1) est réalisé par un circuit à microprocesseur (1), où le circuit à microprocesseur effectue une fonction de générateur (1.1) pour générer le signal de mesure et / ou une fonction de mesure (1.3) et / ou un changement de zone (1.2) et / ou une fonction de comparaison (1.4) et / ou une fonction de hystérèse (1.5) et / ou une génération de signal de sortie (1.6) .

10. Dispositif selon la revendication 9,
**caractérisé en ce que** la mesure est effectuée avec des cycles rectangulaires individuels, où existe un temps de pause modifiable entre deux mesures.

11. Dispositif selon la revendication 10,
**caractérisé en ce que** le temps de pause peut être réglé par un générateur de pauses aléatoires, qui fait partie du circuit de commande / d'analyse (1).

12. Dispositif selon une des revendications 9 à 11,
**caractérisé en ce que** le microprocesseur (1) est commuté dans les pauses de mesure vers un mode d'économie d'énergie.
